# EUROPEAN PATENT APPLICATION

(11) **EP 1 847 583 A2**
(43) Date of publication of application: **24.10.2007**
(21) Application number: 07102827.8
(22) Date of filing: 21.02.2007
(51) Int. Cl.: C10L 1/02, C10L 1/14, C10L 10/18, C11B 5/00, C09K 15/18, C09K 15/22, C09K 15/24

(54) **Improvements in Biofuel**

(30) Priority: 21.04.2006 EP 06112882
(71) Applicant: Infineum International Limited, Abingdon Oxfordshire OX13 6BB (GB)
(72) Inventor: Sutkowski, Andrew Czeslaw,, Abingdon, Oxfordshire OX13 6BB (GB)
(74) Representative: Capaldi, Michael Joseph

(57) **Abstract**

The invention relates to the use of the reaction product of a hydrocarbyl-substituted succinic acylating agent and a polyalkylene amine to prevent or retard the oxidation of a liquid composition which comprises at least 2% by weight of an oil derived from a plant or animal material. Optionally, the reaction product is used in combination with BHQ.

## Description

This invention relates to the prevention or retardation of the oxidation of oils derived from plant or animal materials.

Oils and fats derived from plant or animal materials are increasingly finding application as fuels and in particular, as partial or complete replacements for petroleum derived middle distillate fuels such as diesel. Commonly, such fuels are known as 'biofuels' or 'biodiesel'. Biofuels may be derived from many sources. Amongst the most common are the alkyl, often methyl, esters of fatty acids extracted from plants such as rapeseed, sunflower etc. These types of fuel are often referred to as FAME (fatty acid methyl esters).

There is an environmental drive to encourage the use of such fuels as they are obtained from a renewable source. There are also indications that biofuels produce less pollution on combustion than the equivalent petroleum-derived fuel.

However, as the fuels are derived from natural sources, they are prone to deterioration by oxidation when stored.

The problem of oxidation is less pronounced but still important for petroleum-derived fuels and the use of anti-oxidant additives for petroleum-derived oils is well known. The most common types of species used are aryl-aminic and phenolic anti-oxidants such as diphenylamine, dialkylphenylamine, BHT, BHQ, Irganox L118 and Irganox L57. Also used are ketonic, phosphorus based and sugar ester anti-oxidants such as 2,4 nonanedione, di-lauryl phosphite, tritolyl phosphate and ascorbyl palmitate. US2004/0139649 A1 describes the use of BHT (2,4-di-tert-butylhydroxytoluene) to increase the storage stability of biodiesel.

The present invention is based on the discovery that certain species, hitherto unknown to have any anti-oxidancy properties, are effective to prevent or retard the oxidation of compositions containing oils derived from natural materials.

A further advantageous aspect of the present invention is the discovery that the combination of the species hitherto unknown to have any anti-oxidancy properties with a certain known anti-oxidant material acts synergistically to improve the oxidation stability of oils derived from plant or animal materials. This further aspect was surprising as a similar effect is not seen for combinations with other known anti-oxidant materials.

Thus in accordance with the present invention, there is provided the use of the reaction product of a hydrocarbyl-substituted succinic acylating agent and a polyalkylene amine, optionally in combination with 2,5,-di-tert-butylhydroquinone (BHQ), to prevent or retard the oxidation of a liquid composition, wherein the liquid composition comprises at least 2% by weight of an oil derived from a plant or animal material.

In a preferred embodiment, the reaction product of a hydrocarbyl-substituted succinic acylating agent and a polyalkylene amine is used in combination with BHQ.

As discussed hereinabove, aryl amine species, particularly diaryl amine species are known anti-oxidants for petroleum-derived oils. The oxidation of hydrocarbon fuels is widely believed to proceed via a free radical mechanism:
(i) The reaction is initiated by the generation of free radicals:

   RH → R• + H•
(ii) The hydrocarbon free radical (R• ) can then react with oxygen to form a peroxide radical, which is then able to react with a further hydrocarbon in a self-perpetuating manner:

   R• + O₂ → ROO•

   ROO• + RH → ROOH + R•
(iii) An anti-oxidant (AH) is able to donate a hydrogen atom to the peroxide radical, a reaction which is more favourable than the reaction of the peroxide radical with a further hydrocarbon:

   ROO• + AH → ROOH + A•

The presence of the aryl group in the anti-oxidant renders the anti-oxidant radical (A•) which is generated sufficiently stable by resonance such that propagation is halted. This mechanism also explains the effectiveness of phenolic type anti-oxidants as these too can produce stable radicals through resonance.

This mechanism has also been widely postulated as the process by which oils derived from natural sources oxidise. The structures of the constituents of such oils are characterised by the presence of greater or lesser amounts of olefinic unsaturation. Hydrogen atoms adjacent to olefinic unsaturation are more easily abstracted and as such the generation of R• in step (i) above is more facile. Oils which contain greater proportions of olefinically unsaturated species and/or species with multiple olefinic unsaturation are thus more prone to oxidation. For example, the relative rates of oxidation for C₁₈ methyl esters has been reported in the increasing order: oleic (C18:1), linoleic (C18:2), linolenic (C18:3).

From a consideration of the accepted mechanism for anti-oxidancy outlined above, it was thus surprising to discover that the reaction product used in the present invention was an effective anti-oxidant for compositions containing oils derived from natural sources. This is because, unlike the aryl amine species (and phenolic species), the structure of the reaction products does not allow for free radical stabilisation through resonance. Yet more surprising was the observation that the reaction products were actually more effective as anti-oxidants for compositions containing oils derived from natural sources than were aryl amines.

The various features of the invention, which are applicable to all aspects, will now be described in more detail.

### Reaction product of a hydrocarbyl-substituted succinic acylating agent with a polyalkylene amine.

These materials are well known in the art as ashless dispersants effective in fuel oil compositions.

### (i) The hydrocarbyl- substituted succinic acylating agent

As used in this specification the term "hydrocarbyl" refers to a group having a carbon atom directly attached to the rest of the molecule and having a hydrocarbon or predominantly hydrocarbon character. They may be saturated or unsaturated, linear or branched. Preferably, the hydrocarbyl groups are hydrocarbon groups. These groups may contain non-hydrocarbon substituents provided their presence does not alter the predominantly hydrocarbon character of the group. Examples include keto, halo, nitro, cyano, alkoxy and acyl. The groups may also or alternatively contain atoms other than carbon in a chain otherwise composed of carbon atoms. Suitable hetero atoms include, for example, nitrogen, sulphur, and oxygen. Advantageously, the hydrocarbyl groups are alkyl groups.

The hydrocarbyl substituents preferably average at least 30 to 50 and up to about 200 carbon atoms, corresponding to an Mn of approximately 400 to 2500 such as 550 to 1500, and preferably 700 to 1500. An Mn of 700 to 1300 is preferred.

Specific examples of the predominantly saturated hydrocarbyl substituents containing an average of more than 30 carbon atoms are the following: a mixture of poly(ethylene/propylene) or poly(ethylene/butene) groups of about 35 to about 70 carbon atoms; a mixture of poly(propylene/1-hexene) groups of about 80 to about 100 carbon atoms; a mixture of poly(isobutene) groups having an average of 50 to 75 carbon atoms; a mixture of poly (1-butene) groups having an average of 50-75 carbon atoms.

A preferred source of the substituents are poly(isobutene)s, for examples those obtained by polymerization of a C₄ refinery stream having a butene content of 35 to 75 weight per cent and isobutene content of 30 to 60 weight per cent in the presence of a Lewis acid catalyst such as aluminium trichloride or boron trifluoride. These polybutenes predominantly contain isobutene monomer repeating units of the configuration

-C(CH₃)₂CH₂-

The hydrocarbyl substituent is attached to the succinic acid moiety or a derivative thereof via conventional means known to those skilled in the art.

### (ii) The polyalkylene polyamine

Suitable polyamines are those comprising amino nitrogens linked by alkylene bridges, which amino nitrogens may be primary, secondary and/or tertiary in nature. The polyamines may be straight chain, wherein all the amino groups will be primary or secondary groups, or may contain cyclic or branched regions or both, in which case tertiary amino groups may also be present. The alkylene groups are preferably ethylene or propylene groups, with ethylene being preferred. Such materials may be prepared from the polymerisation of lower alkylene diamines such as ethylene diamine, a mixture of polyamines being obtained, or via the reaction of dichloroethane and ammonia.

The polyamines will usually be provided as a mixture of different polyamines which vary in the number of nitrogen atoms per molecule. Mixtures predominating in molecules containing 4, 5 and 6 nitrogen atoms (PAM) are suitable. Also suitable are mixtures commonly known as HPAM (heavy PAM) which predominate in molecules containing 7, 8 and 9 nitrogen atoms. It is also possible to use individual polyamine species, for example TETA, TEPA.

Preferred are materials formed by the reaction between a hydrocarbyl substituted succinic anhydride or acid (PIBSA) with a polyalkylene polyamine. These materials are commonly referred to as PIBSA-PAM or PIBSA-HPAM depending on the nature of the polyamine used.

### Oil derived from plant or animal material

Examples of oils and fats derived from animal or vegetable material are rapeseed oil, coriander oil, soyabean oil, cottonseed oil, sunflower oil, castor oil, olive oil, peanut oil, maize oil, almond oil, palm kernel oil, coconut oil, mustard seed oil, jatropha oil, beef tallow and fish oils. Further examples include oils derived from corn, jute, sesame, shea nut, ground nut and linseed oil and may be derived therefrom by methods known in the art. Rapeseed oil, which is a mixture of fatty acids partially esterified with glycerol is available in large quantities and can be obtained in a simple way by pressing from rapeseed. Recycled oils such as used kitchen oils are also suitable.

As alkyl esters of fatty acids, consideration may be given to the following, for example as commercial mixtures: the ethyl, propyl, butyl and especially methyl esters of fatty acids with 12 to 22 carbon atoms, for example of lauric acid, myristic acid, palmitic acid, palmitoleic acid, stearic acid, oleic acid, elaidic acid, petroselic acid, ricinoleic acid, elaeostearic acid, linoleic acid, linolenic acid, eicosanoic acid, gadoleic acid, docosanoic acid or erucic acid, which have an iodine number from 50 to 150, especially 90 to 125. Mixtures with particularly advantageous properties are those which contain mainly, i.e. to at least 50 wt% methyl esters of fatty acids with 16 to 22 carbon atoms and 1, 2 or 3 double bonds. The preferred lower alkyl esters of fatty acids are the methyl esters of oleic acid, linoleic acid, linolenic acid and erucic acid.

Commercial mixtures of the stated kind are obtained for example by cleavage and esterification of animal and vegetable fats and oils by their transesterification with lower aliphatic alcohols. For production of alkyl esters of fatty acids it is advantageous to start from fats and oils which contain low levels of saturated acids, less than 20%, and which have an iodine number of less than 130. Blends of the following esters or oils are suitable, e.g. rapeseed, sunflower, coriander, castor, soyabean, peanut, cotton seed, beef tallow etc. Alkyl esters of fatty acids based on a new variety of rapeseed oil, the fatty acid component of which is derived to more than 80 wt% from unsaturated fatty acids with 18 carbon atoms, are preferred.

Particularly preferred are oils capable of being utilised as biofuels. Biofuels, i.e. fuels derived from animal or vegetable material, are believed to be less damaging to the environment on combustion, and are obtained from a renewable source. It has been reported that on combustion less carbon dioxide is formed by the equivalent quantity of petroleum distillate fuel, e.g. diesel fuel, and very little sulphur dioxide is formed. Certain derivatives of vegetable oil, e.g. those obtained by saponification and re-esterification with a monohydric alkyl alcohol, may be used as a substitute for diesel fuel.

Thus, a biofuel is an oil obtained from vegetable or animal material, or both, or a derivative thereof, capable of being utilised as a fuel.

Whilst many of the above oils may be used as biofuels, preferred are vegetable oil derivatives, of which particularly preferred biofuels are alkyl ester derivatives of rapeseed oil, cottonseed oil, soyabean oil, sunflower oil, olive oil, or palm oil, rapeseed oil methyl ester being especially preferred, either alone or in admixture with other vegetable oil derivatives e.g. mixtures in any proportion of rapeseed oil methyl ester and palm oil methyl ester.

At present, biofuels are most commonly used in combination with petroleum-derived oils. The present invention is applicable to mixtures of biofuel and petroleum-derived fuels in any ratio. For example, at least 5%, preferably at least 25%, more preferably at least 50%, for example at least 95% by weight of the oil may be derived from a plant or animal source.

For the avoidance of doubt, the present invention is also applicable to pure biofuels. In one embodiment therefore, the liquid composition comprises essentially 100% by weight of an oil derived from a plant or animal source.

A practical consequence of the present invention is that pure biofuel and fuels with high biofuel contents, which are particularly prone to deterioration through oxidation, can be treated to improve their storage lifetimes. This may be important whether the biofuel is intended to be used essentially pure or whether it is to be blended with petroleum-derived oils following extended storage.

### Treat Rate

The reaction product of a hydrocarbyl-substituted succinic acylating agent and a polyalkylene amine and BHQ, when present, are each added to the liquid composition in an amount of from 10 to 10,000ppm by weight based on the weight of the liquid. Preferably, in an amount of from 10 to 2,000ppm, for example from 10 to 1,000ppm by weight based on the weight of the liquid.

### Prevention or retardation of oxidation

The oxidation stability of liquid compositions comprising oils derived from plant or animal materials may be determined using the Rancimat Test (ISO 6886, pr EN 14112). This method originated in the food industry [see for example: H.Prankl, "Oxidation Stability of fatty acid methyl esters", 10^{th} European Conference on Biomass for Energy and Industry, 8-11 June 1998, Wurzburg]. In the test, samples of liquid are aged at a constant temperature (110°C) whilst air is passed through the liquid at a rate of 10 litres/hour. The exhaust airflow passes through a measuring cell filled with distilled water. The conductivity of the measuring cell is determined continuously and recorded automatically. As the liquid oxidises, volatile organic acids are produced and taken up by the distilled water. This increases the conductivity of the water. The oxidation process is such that there is a gradual increase in measured conductivity followed by a rapid increase. The length of the period prior to the rapid increase, known as the 'induction period' is a measure of the oxidation stability of the liquid under test. The presence of an effective anti-oxidant will lengthen the induction period. The Rancimat Test has been adopted as a specification test in the qualification of biodiesel fuels.

The prevention or retardation of the oxidation of the liquid composition is preferably as determined using the Rancimat Test (ISO 6886). That is, the prevention or retardation of the oxidation of the liquid composition is manifest by an increase in the induction period measured by the Rancimat Test compared to the untreated liquid composition.

The invention will now be described by way of example only.

Table 2 below shows the results obtained from Rancimat testing. A biofuel, having the specification shown in Table 1 below, was tested alone, containing a number of commonly used types of anti-oxidants for comparison purposes, and containing a PIBSA-HPAM material according to the invention. Details of the species used and treat rates are given in Table 2.

**Table 1**

| Iodine value | g I₂ / g biofuel | 66 |
|---|---|---|
| C16:0 | mass % | 4.59 |
| C16:1 | mass % | 0.21 |
| C18:0 | mass % | 1.58 |
| C18:1 | mass % | 56.04 |
| C18:2 | mass % | 19.88 |
| C18:3 | mass % | 10.39 |
| C20:0 | mass % | - |
| Total Saturates | mass % | 6.17 |

**Table 2**

| No. | Additive | type | Treat rate/ ppm | Rancimat Induction Time / hours |
|---|---|---|---|---|
| 1 | None | Base fuel | - | 5.93 |
| 2 | DPA | diphenylamine | 200 | 5.36 |
| 3 | Naugalube 438L | dialkylphenylamine | 200 | 5.81 |
| 4 | BHT | dialkylphenol | 200 | 7.54 |
| 5 | BHT | dialkylphenol | 200 | 8.31 |
| 6 | BHQ | t-butylhydroquinone | 200 | 10.11 |
| 7 | Irganox L118 | alkylphenol | 200 | 7.92 |
| 8 | Irganox L57 | alkylphenol | 200 | 5.36 |
| 9 | 2,4-nonanedione | dialkyl ketone | 200 | 6.79 |
| 10 | dilauryl phosphite | phosphorus based | 200 | 6.49 |
| 11 | tritolyl phosphate | phosphorus based | 200 | 6.50 |
| 12 | ascorbyl palmitate | sugar ester | 200 | 8.74 |
| 13 | ascorbyl palmitate | sugar ester | 200 | 8.54 |
| 14 | PIBSA-HPAM | alkyl-polyamine | 200 | 9.00 |

| | | | | |
|---|---|---|---|---|
| (BHT - 2,4,-di-tert-butylhydroxytoluene; BHQ - 2,5-di-tert-butylhydroquinone; PIBSA-PAM - reaction product of PIB₉₅₀ succinic anhydride with polyalkylene polyamine predominating in molecules containing 7- 9 N atoms) | | | | |

From the results obtained, it can be seen that the Example according to the invention (No. 14) was effective to retard the oxidation of the biofuel. Also shown is that the Example according to the invention was more effective in biofuel than a number of commonly used anti-oxidant species.

Table 3 below shows the results of a second series of Rancimat testing. In this series of tests, the PIBSA-HPAM of Example 14 in Table 2 was tested alone, in combination with a BHQ and in combination with the same well known anti-oxidant used in US2004/0139649 A1, BHT (2,4-di-tert-butylhydroxytoluene). Data for BHT alone and BHQ alone are given for completeness. The data are presented as the increase in Rancimat Induction time over that measured for the base fuel. The value obtained for the base fuel was 4.95 hours. The bracketed values in the 'Additive' column refer to the treat rates in ppm by weight of each component.

**Table 3**

| No. | Additive | Increase in Rancimat Induction Time compared to base fuel / hours |
|---|---|---|
| 15 | PIBSA-HPAM (250) | 3.16 |
| 16 | PIBSA-HPAM (500) | 5.26 |
| 17 | PIBSA-HPAM (1000) | 10.62 |
| 18 | BHT (250) | 2.22 |
| 19 | BHT (500) | 4.65 |
| 20 | BHT (1000) | 6.34 |
| 21 | PIBSA-HPAM (125) + BHT (125) | 2.21 |
| 22 | PIBSA-HPAM (250) + BHT (250) | 5.57 |
| 23 | PIBSA-HPAM (500) + BHT (500) | 7.92 |
| 24 | PIBSA-HPAM (125) + BHQ (125) | 13.95 |
| 25 | PIBSA-HPAM (250) + BHQ (250) | 19.28 |
| 26 | PIBSA-HPAM (500) + BHQ (500) | 30 + |
| 27 | BHQ (200) | 10.11 |

| | | |
|---|---|---|
| (BHT - 2,4,-di-tert-butylhydroxytoluene; BHQ - 2,5-di-tert-butylhydroquinone; PIBSA-PAM - reaction product of PIB₉₅₀ succinic anhydride with polyalkylene polyamine predominating in molecules containing 7- 9 N atoms) | | |

The results show that PIBSA-HPAM is an effective antioxidant for the biofuel when used alone (confirming the results seen from Table 2). BHT and BHQ are also effective as may have been expected. However, the combination of PIBSA-HPAM with BHQ was especially effective (Example Nos. 24-26). From the simple sum of the contributions of each component, it may have been predicted that 250ppm of PIBSA-HPAM (3.16 hours) combined with 200ppm of BHQ (10.11 hours) would give an Induction Time of 13.27 hours. However, Example No. 25 indicates a synergistic interaction between the two components with a value of 19.28 hours obtained for the combination of 250ppm of each component. This type of synergistic interaction was not seen when BHT was used in place of BHQ. For instance, comparing Example Nos. 15 and 18 with No. 22 indicates at best a neutral interaction.

## Claims

1. The use of the reaction product of a hydrocarbyl-substituted succinic acylating agent and a polyalkylene amine, optionally in combination with BHQ, to prevent or retard the oxidation of a liquid composition, wherein the liquid composition comprises at least 2% by weight of an oil derived from a plant or animal material.

2. A use according to claim 1 wherein the liquid composition comprises at least 5%, preferably at least 25%, more preferably at least 50%, for example at least 95% by weight of an oil derived from a plant or animal material.

3. A use according to claim 1 or claim 2 wherein the reaction product of a hydrocarbyl-substituted succinic acylating agent and a polyalkylene amine is used in combination with BHQ.

4. A use according to any preceding claim wherein the reaction product of a hydrocarbyl-substituted succinic acylating agent and a polyalkylene amine comprises a PIBSA-PAM or a PIBSA-HPAM material.

5. A use according to any preceding claim wherein the prevention or retardation of the oxidation of the liquid composition is as determined using the Rancimat Test (ISO 6886).
